# EUROPEAN PATENT APPLICATION

(11) **EP 4 466 989 A1**
(43) Date of publication of application: **27.11.2024**
(21) Application number: 24177824.0
(22) Date of filing: 24.05.2024
(51) Int. Cl.: A01K 1/01

(54) **MANURE SCRAPING SYSTEM AND RELATED METHOD**

(30) Priority: 24.05.2023 NL 2034906
(71) Applicant: Royal De Boer Stalinrichtingen B.V., 8938 AV Leeuwarden (NL)
(72) Inventor: Van der Meulen, Jan, 8938 AV LEEUWARDEN (NL)
(74) Representative: Arnold & Siedsma

(57) **Abstract**

The present invention relates to a manure scraper system, an animal accommodation provided therewith and a method therefor. The manure scraper system comprises:
- a manure scraper which is configured to be moved along a ground surface in an animal accommodation and to remove and/or carry along manure with; and
- a pulling device which is configured to move the manure scraper, comprising:
- a cable connected to the manure scraper;
- a drum frame provided with a drum connected to the cable;
wherein the drum is rotatable about a drum rotation axis, such that the cable is wound up by a rotation of the drum in a first rotation direction; and
- an undercarriage which is connected to the drum frame and which is configured to be arranged on the ground surface,
wherein the drum frame is rotatable relative to the undercarriage or is movable over a circular arc relative to the undercarriage about or by at least one first rotation axis.

## Description

The present invention relates to a manure scraper system and a method for removing manure.

Manure scraper systems are known. The known manure scraper systems comprise a drum to which a cable is connected with a first end thereof. The drum is rotatable and can wind up the cable by means of the rotation. The cable is connected with its second end to a manure scraper. The drum winding up the cable enables the manure scraper, which is located on the ground of an animal accommodation, to be moved over the accommodation floor.

The drum has a determined width which is a multiple of the diameter of the cable. During winding up of the cable, the cable is regularly positioned half over a wound-up coil present on the drum. When the cable is wound up further, the cable slides off the coil present on the drum. The friction between the cable coils is great due to the tension on the cable. A drawback hereof is that this causes wear to the cable during winding up thereof. This reduces the lifespan and requires maintenance, resulting in downtime of the manure scraping machine.

The present invention has for its object to obviate or at least reduce the above stated problems. It can be a particular object of the invention to provide a manure scraper system which reduces wear to the cable.

This object is achieved with a manure scraper system, wherein the manure scraper system comprises:
- a manure scraper which is configured to be moved along a ground surface in an animal accommodation and to remove and/or carry along manure with; and
- a pulling device which is configured to move the manure scraper, comprising:
   - a cable connected to the manure scraper;
   - a drum frame provided with a drum connected to the cable;
      wherein the drum is rotatable about a drum rotation axis, such that the cable is wound up by a rotation of the drum in a first rotation direction; and
   - an undercarriage which is connected to the drum frame and which is configured to be arranged on the ground surface,
      wherein the drum frame is rotatable relative to the undercarriage or is movable over a circular arc relative to the undercarriage about or by at least one first rotation axis.

An advantage of the drum frame being pivotable or rotatable is that the drum is oriented in the direction of the cable during winding up. This prevents friction of the cable due to different coils rubbing along each other. This has the advantage that the lifespan of the cable is increased. This reduces the chances of maintenance to the manure scraper system, which increases the length of time that the system is operational. A further advantage is that the costs for keeping the manure scraper system operational are reduced because the cable requires less frequent replacement. Yet another advantage is that downtime of the manure scraping machine is reduced.

Yet another advantage is that the drum is automatically oriented in the direction of the cable owing to the fact that it is pivotable and the fact that the cable is tensioned during the winding up. Automatically means that no external drive is needed for the pivoting. The manure scraping machine is hereby able to realize a coiling of the cable, wherein friction and therefore wear are reduced, without expensive control. A plurality of layers of coils can here be placed on top of or above each other.

With the pulling device of the system according to the invention it is further possible to wind up the cable in orderly manner such that the coils come to lie against each other, wherein mutually adjacent coils are only pressed against each other to limited extent. This also makes only a limited force necessary for making the drum frame pivot. This also increases the lifespan of the cable, particularly in respect of a possible plastic sheath of such a cable.

In addition, the winding process is readily controllable. This enables a direct link between the number of revolutions of the drum and the length of the wound-up/unwound cable, and thereby with the movement of the manure scraper or scrapers.

Winding up the cable with the drum moves the manure scraper over the ground surface in the animal accommodation, also referred to as accommodation floor. The manure scraper is an element which moves along the ground of the animal accommodation and thereby carries along manure or moves it into the pit underneath the ground surface. The manure scraper can be any manure scraper known to the skilled person.

The drum frame being pivotable relative to the undercarriage means that the drum frame has a substantially vertical rotation axis relative to the undercarriage, also referred to as pivot axis. A vertical rotation axis is understood to mean a rotation axis extending substantially perpendicularly relative to a horizontal reference plane, for instance the ground surface of the animal accommodation or the ground surface on which the pulling device is arranged, or the undercarriage.

Owing to the rotation axis, the centre of gravity of the drum can rotate about a fixed rotation axis.

Using two pivot axes or rotation axes enables the drum frame also to undergo a translation over a circular arc, this in addition to a rotation.

The centre of gravity of the drum can also perform a movement similar to a movement of a middle rod of a three-rod system, wherein the two other rods are the same length and wherein the distance between their pivot points on the fixed world, or ground surface, is smaller than the length of the middle rod.

In the context of the present application pivot axis and first and/or second rotation axis can be used interchangeably.

The pivot axis or first rotation axis and/or second rotation axis and/or drum rotation axis can be both physical shafts and imaginary axes.

The drum is rotatable about a drum rotation axis, wherein the rotation axis extends substantially parallel to the ground surface in use. The cable is connected between the manure scraper and the drum. In the context of the present application the drum rotation axis is also referred to as the rotation axis relating to the drum.

In an embodiment according to the invention the drum frame is connected with the or the first rotation axis to the undercarriage.

The or the first rotation axis can be both an imaginary axis and a physical shaft. A physical first rotation axis can for instance be a shaft. The first rotation axis preferably extends substantially in a vertical direction relative to the undercarriage. A vertical direction is understood to mean a direction extending perpendicularly relative to a horizontal reference plane, for instance the ground surface of the animal accommodation or the ground surface on which the pulling device is arranged, or the undercarriage.

The first rotation axis enables the drum to pivot effectively, i.e. rotate about a substantially vertical axis. By pivoting, the drum can be oriented automatically, without any control, toward the direction in which the cable extends. The cable is hereby wound up without being wound half onto other coils. This reduces friction and thereby increases the lifespan of the cable.

In an embodiment according to the invention the drum frame is connected with a second rotation axis to the undercarriage.

The second rotation axis realizes a stable connection between the undercarriage and the drum frame. This reduces the chances of undesirable clearances during pivoting of the drum frame.

In an embodiment according to the invention the manure scraper system further comprises two pivoting rods which are provided between the rotation axes and the undercarriage, wherein a first end of each of the pivoting rods is connected to one of the respective rotation axes and a second end is connected rotatably to the undercarriage.

The rotation axis of the rotatable connection between the second end and the undercarriage, so between pivot axes and the undercarriage, is oriented substantially in vertical direction. The rotation axis is substantially parallel to the rotation axis of the pivot axes.

The two rotation axes enable the drum frame to pivot effectively relative to the undercarriage. Alternatively or additionally, it is realized by the rotation axes that the rotation of the drum frame relative to the undercarriage also undergoes a translation over a circular arc, this in addition to a rotation. The drum is hereby positioned more perpendicularly of the cable during the whole winding process. This reduces the mutual friction of the cable during winding up still further. In such an embodiment according to the invention the drum frame undergoes a preferably simultaneous rotation and translation during use. This simultaneous movement is made possible in this embodiment by making use of a four-rod system. The movable axis of the drum frame is here preferably longer than the "fixed" axis lying opposite thereto, and the other two axes are substantially the same length and are both connected at the one outer end to a different outer end of the "fixed" axis each and with the other end to another outer end of the movable axis of the drum frame each.

In an embodiment according to the invention a downward directed running surface is arranged on the drum frame, wherein the undercarriage comprises a support part which comprises at least one upward directed roller element, wherein the roller element is configured to run on the running surface of the drum frame.

The roller element can be any suitable element which can move over a running surface, for instance a wheel, a cylinder, a ball or a belt. Downward directed means directed toward the ground surface, for instance the accommodation floor.

Because the roller element is directed upward, contamination of the roller element, for instance with manure or other dirt, is prevented. It is therefore always possible for the drum element to move over the undercarriage during pivoting about the rotation axes and/or during translation over the circular arc.

In an embodiment according to the invention at least the first rotation axis is arranged on a first side of the drum frame and the support part is arranged on a second side of the drum frame lying opposite the first part.

By providing at least the first rotation axis on the first side the drum frame can pivot on the first side. The second side of the drum frame, which lies opposite the first side, can move over the undercarriage effectively. On the second side the drum frame is supported, this preventing undesired forces on the rotation axes. This extends the lifespan of the manure scraper system. Alternatively or additionally, one or more roller elements are arranged on a first side of the undercarriage for the purpose of further supporting the drum frame.

In an embodiment according to the invention the manure scraper system further comprises a second pulling device, wherein the pulling device is configured to move the manure scraper in a first direction of movement and wherein the second pulling device is configured to move the manure scraper in a second direction of movement.

The first and second direction of movement are preferably substantially opposite. The coaction of the first and second pulling device enables the manure scraper to be moved reciprocally over the accommodation floor in simple manner.

In an embodiment according to the invention the manure scraper system further comprises a guide element for guiding the cable through an angle.

The guide element, also referred to as corner wheel, is preferably positioned such that the cable is substantially guided through an angle of 90 degrees. The guide element enables the pulling direction of the cable to be changed to a desired direction in effective manner. A somewhat variable angle is further possible in use owing to the pivoting. The distance between the guide element and the drum frame is of no or least of limited importance for the pivoting action of the drum frame. The distance can preferably be chosen independently of the embodiment of the drum frame. This has the advantage, among others, that the drum frame can be placed very close to the guide element, or conversely at a distance therefrom, if desired.

In an embodiment according to the invention the frame is provided with a protective cover which is configured to enclose the drum.

Dirt in the drum is prevented by the protective cover. A further advantage is that damage to the drum and/or the cable is prevented. This increases the lifespan of the manure scraper system according to the invention still further.

In an embodiment according to the invention the pulling device further comprises a drive for rotating the drum about the rotation axis.

The drive enables the cable to be wound onto the drum in effective manner.

In an embodiment according to the invention the drive comprises a drive element and a chain connected thereto, wherein the chain is connected operatively to the drum for the purpose of rotating the drum, wherein the position of the drive element relative to the chain is adjustable.

Adjusting the position of the drive element relative to the chain realizes as it were a chain tensioner. Adjusting the position of the drive element enables some wear and/or elongation of the chain to be counterbalanced. Extension of the chain can particularly be compensated for.

In a further embodiment according to the invention the manure scraper system comprises an encoder.

Providing an encoder, also referred to as pulse counter, enables accurate determination of the rotation of the drum. The direct link already stated above between the number of revolutions of the drum and the movement of the manure scraper or scrapers enables the position of the scraper or scrapers to be determined properly and even controlled by making use of the encoder. This makes control of the overall process even better. The encoder can be arranged at a number of positions, for instance on the drive of the drum, on a possible chain of such a drive, on the drum itself or the axis thereof, or at a different suitable position.

It has been found that the system according to the invention is applicable in effective manner for removing and/or carrying along manure with. It has also been found that the pulling device is also usable as such as rotatable/pivotable system in other applications. These are other applications wherein a wire, cable, rope, hose and the like must be rolled up, and particularly wound onto a drum.

The invention further also relates to an animal accommodation provided with a manure scraper according to any one of the foregoing claims.

The animal accommodation provides similar advantages and effects as described for the manure scraper system.

The invention further relates to a method for removing manure, comprising of:
- providing a manure scraper system according to the invention;
- rotating the drum such that the cable is retracted; and
- moving the manure scraper over the ground surface by retracting the cable.

The method provides similar advantages and effects as described for the manure scraper system and/or the animal accommodation.

In an embodiment according to the invention the method further comprises the step of:
- pivoting the pulling device such that the cable is oriented substantially perpendicularly of the rotation axis of the drum;

Pivoting of the pulling device preferably takes place automatically here. Automatically means that the drum frame is pivoted about the at least one rotation axis by the tension of the cable. The cable starts the winding up on a first side of the drum. The cable then reaches increasingly further toward the centre. The drum frame is here pivoted over half a deflection. The cable is then wound up further to the second end. The drum frame forms the second deflection from the centre to the second end. The cable is subsequently wound onto itself and will wind up from the second toward the first end. The drum is automatically oriented toward the cable by the pivoting of the drum frame, and so prevents friction of the cable during the winding up.

In the present invention the deflection of the pulling device lies in the range of 0-20 degrees, preferably in the range of 0-15 degrees, and most preferably in the range of 0-10 degrees. The angle must here be seen as the angle between a centre line of the undercarriage and a centre line of the drum frame. The centre line of the undercarriage remains static relative to the ground surface during use. The centre line of the drum frame undergoes a rotation.

Further features, advantages and details of the invention are described on the basis of embodiments thereof, wherein reference is made to the accompanying drawings, in which:
- figure 1 shows a top view of an animal accommodation according to the invention;
- figures 2A-B show top views of a manure scraping device;
- figure 2C shows a top view of a second embodiment of a manure scraping device;
- figure 3 shows a perspective view of a manure scraping device;
- figure 4 shows a perspective view of a drive;

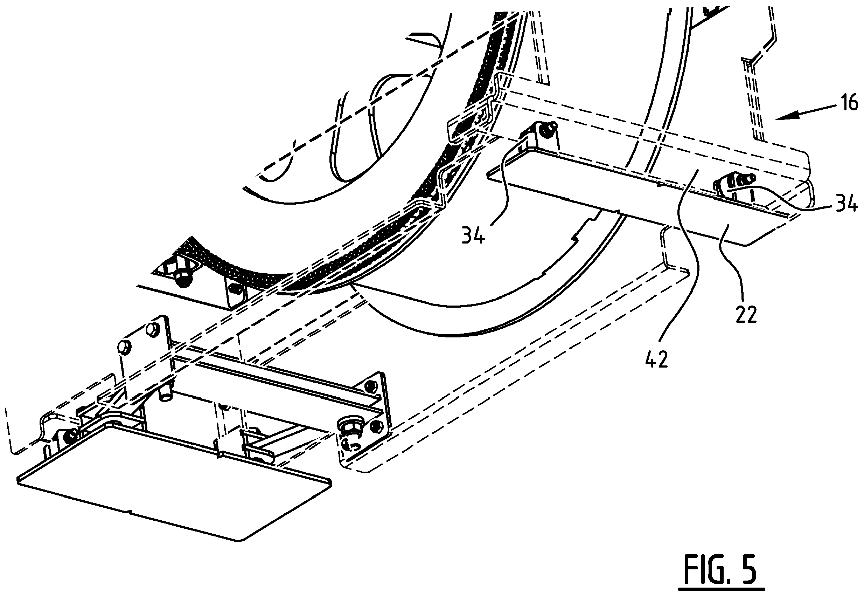

- figure 5 shows a perspective bottom view of the pulling device;
- figures 6A-C show several top views of pulling devices; and
- figures 7A-C show several top views of guide devices.

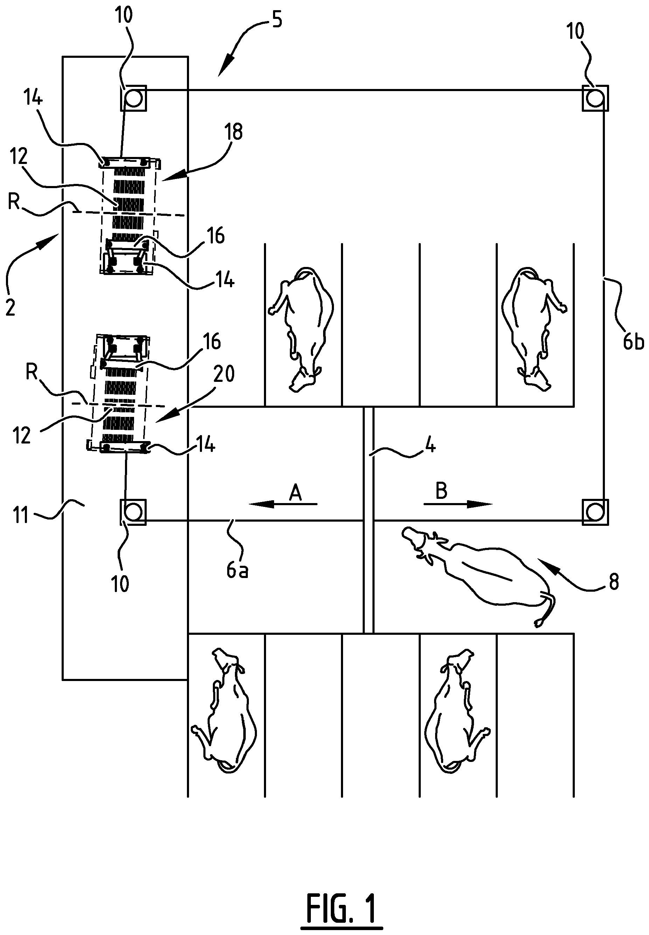

Manure scraper system 2 (figure 1) comprises manure scraper 4 and is provided in animal accommodation 1. First cable 6a and second cable 6b are connected to manure scraper 4. In the shown embodiment first cable 6a is configured to pull manure scraper 4 in a first direction A. Second cable 6b is configured to pull manure scraper 4 in the second direction B. First cable 6a is connected to first pulling device 20. Second cable 6b is connected to second pulling device 18. First pulling device 20 and second pulling device 18 are both provided with undercarriage 14 and drum frame 16. Arranged in drum frame 16 is drum 12. Drum 12 is provided in drum frame 16 for rotation around rotation axis R.

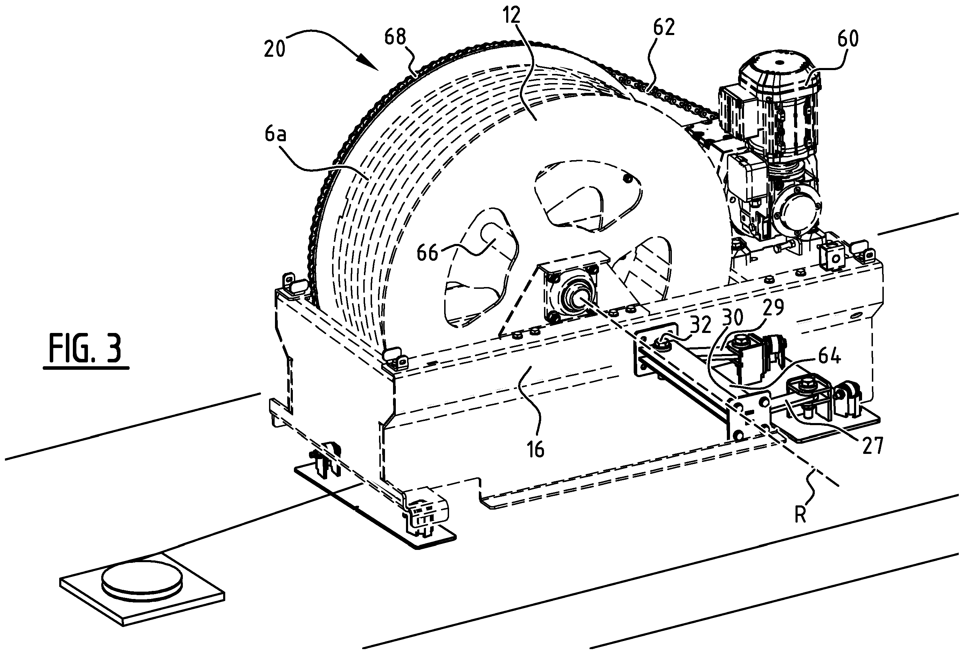

Pulling device 20 is configured to wind up cable 6a. For this purpose pulling device 20 has a drive which rotates drum 12. When drum 12 of pulling device 20 rotates about rotation axis R, cable 6a is wound onto drum 12. Manure scraper 4 is hereby moved in direction A. Pulling device 18 is configured to wind up cable 6b. For this purpose pulling device 20 has drive 60 (figure 3) which rotates drum 12. When drum 12 of pulling device 18 rotates about rotation axis R, cable 6b is wound onto drum 12. Manure scraper 4 is hereby moved in direction B. During winding of cable 6a onto pulling device 20 cable 6b is unwound from pulling device 18. During winding of cable 6b onto pulling device 18 cable 6a is unwound from pulling device 20.

Cable 6a and cable 6b (figure 1) are guided through an angle of substantially 90 degrees by guides 10. First pulling device 20 and second pulling device 18 can hereby be arranged opposite each other on platform 11, and at the same time be arranged on opposite sides of manure scraper 4.

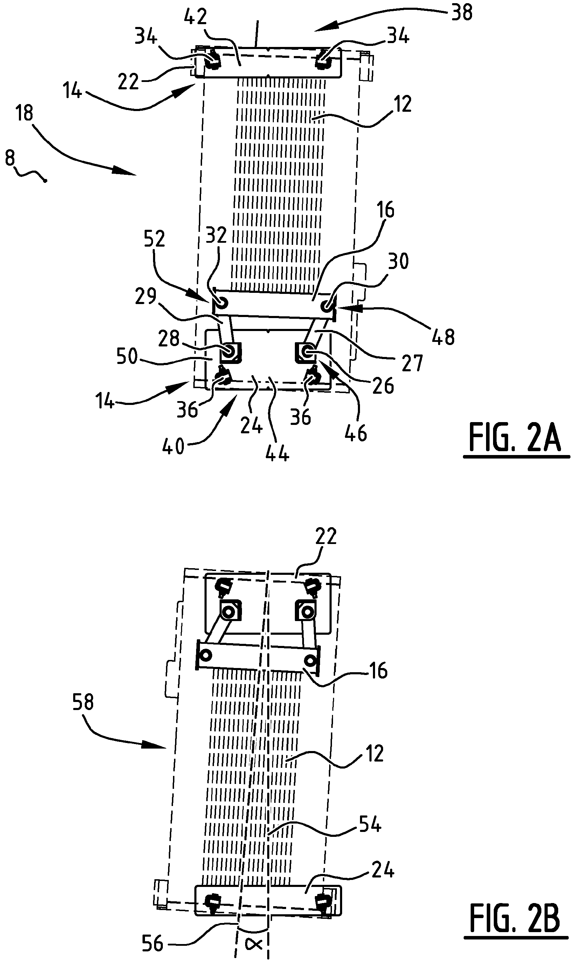

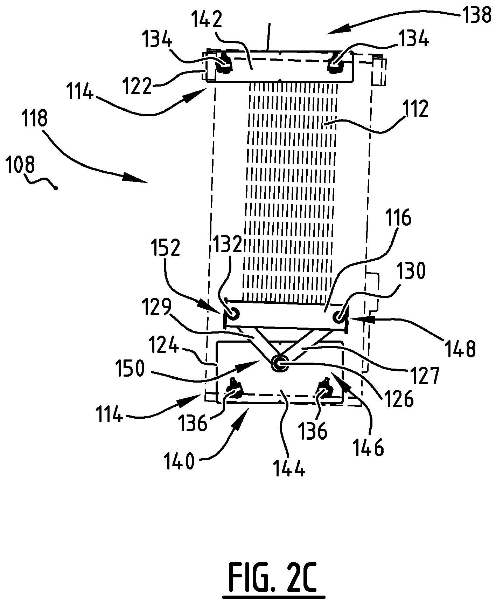

In the shown embodiment pulling device 18 (figure 2A) is provided with an undercarriage 14 comprising two parts. First part 22 is positioned on first side 38 of drum frame 16. Second part 24 is positioned on second side 40 of drum frame 16. First side 38 lies opposite second side 40 and both are located on the short sides.

First part 22 is provided with two wheels 34. Wheels 34 run over running surface 42 which is arranged on the underside of drum frame 14. Wheels 34 are here directed upward so as to run over running surface 42. Directed upward means directed away from ground surface 8.

Second part 24 is provided with two wheels 36. Second part 24 is provided with running surface 44 over which wheels 36 run. Wheels 36 are here directed upward so as to run over running surface 44. Directed upward means directed away from ground surface 8. Second part 24 is further provided with two pivot shafts or rotation shafts 26, 28. First pivot shaft 26 is connected by means of pivot arm 27 to drum frame 16. Pivot arm 27 has a first end 46 and second end 48. First end 46 is connected to pivot shaft 26 and second end 48 is connected with rotatable connection 30 rotatably to drum frame 16. Second pivot shaft 28 is connected by means of pivot arm 29 to drum frame 16. Pivot arm 29 has a first end 50 and second end 52. First end 50 is connected to pivot shaft 28 and second end 52 is connected with rotatable connection 32 rotatably to drum frame 16.

First centre line 54 (figure 2B) runs straight over first part 22 and second part 24 of undercarriage 14. Second centre line 56 runs straight over drum 12. Drum 12 is shown in extreme pivoting position 58 in figure 2B. In extreme pivoting position 58 second centre line 56 has the maximum deflection relative to first centre line 54. Angle α between first centre line 45 and second centre line 56 is about 7 degrees in extreme pivoting position 58.

In the shown embodiment pulling device 118 (figure 2A) is provided with undercarriage 114 comprising two parts. First part 122 is positioned on first side 138 of drum frame 116. Second part 124 is positioned on second side 140 of drum frame 116. First side 138 lies opposite second side 140 and both are located on the short sides.

First part 122 is provided with two wheels 134. Wheels 134 run over running surface 142 which is arranged on the underside of drum frame 114. Wheels 134 are here directed upward so as to run over running surface 142. Directed upward means directed away from ground surface 108.

Second part 124 is provided with two wheels 136. Second part 124 is provided with running surface 144 over which wheels 136 run. Wheels 136 are here directed upward so as to run over running surface 144. Directed upward means directed away from ground surface 108. Second part 124 is further provided with pivot shafts 126. Pivot shaft 126 is connected by means of pivot arms 127 and 129 to drum frame 116. Pivot arm 127 has a first end 146 and second end 148. First end 146 is connected to pivot shaft 126 and second end 148 is connected with fixed connection 30 rotatably to drum frame 116. Pivot arm 129 has a first end 150 and second end 152. First end 150 is connected to pivot shaft 126 and second end 152 is connected with fixed connection 132 rotatably to drum frame 116. Owing to pivot shaft 126 drum frame 116, and therewith drum 112, performs a rotating movement about pivot shaft 126.

Drive 60 (figure 3) is connected with chain 62 to outer edge 68 of drum 12. By driving chain 62 drum 12 is rotated about rotation axis R by shaft 66. Cable 6a is provided on drum 12. Further shown is connecting beam 64. Connecting beam 64 forms part of drum frame 16 and is connected fixedly thereto. Connecting beam 64 is connected by means of rotatable connections 30 and 32 to pivot arms 27 and 29.

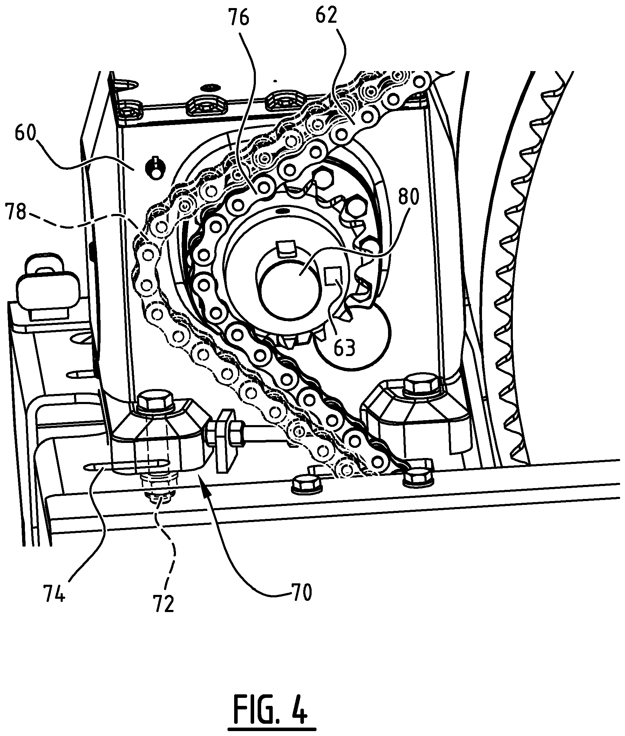

Drive 60 (figure 4) is provided with drive shaft 80. Drive 60 is mounted on drum frame 16 by means of mounting element 70. Mounting element 70 comprises bolt 72 which is tightened in recess 74. Recess 74 extends in a direction away from drum 12. This makes the position of bolt 72 in recess 74 adjustable. Adjusting of bolt 72 in recess 74 enables chain 62 to be tensioned more tightly or loosely. In the shown position of bolt 72 chain 62 has a first position 76. If bolt 72 were to be fastened further to the left in recess 74, chain 62 would be in second position 78 (shown transparently). A chain tensioner of chain 62 is hereby realized in simple manner. In the shown embodiment encoder 63 (shown schematically in figure 4) is arranged in order to thereby be able to determine the number of revolutions of drum 12 in use.

Second part 22 of undercarriage 14 is mounted with connecting elements 90 on the accommodation floor. Provided on upper side 92 of second part 22 are wheels 34 which are directed upward. Wheels 34 run over running surface 42 of drum frame 16. Running surface 42 is directed downward, so toward the accommodation floor.

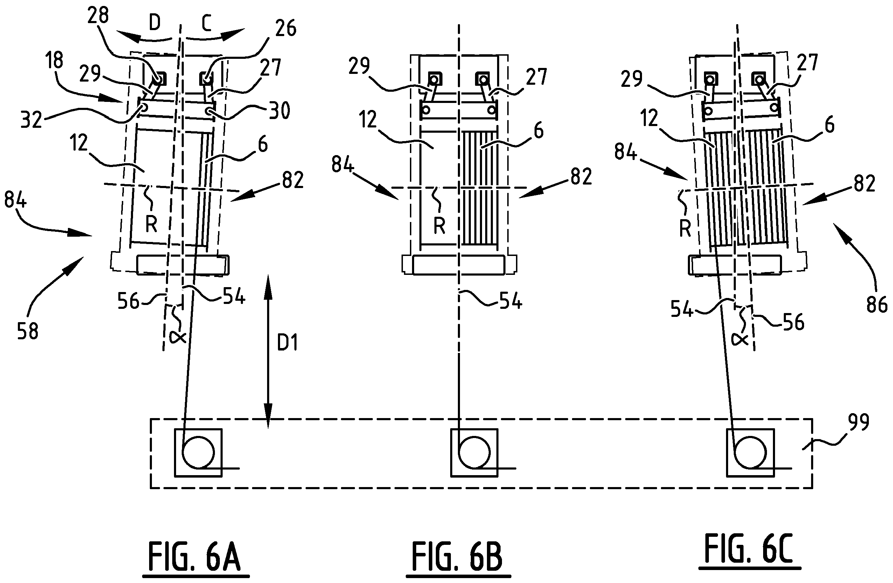

In use, pulling device 18 moves between different pivoting positions. In extreme pivoting position 58 (figure 6A) cable 6 lies on first side 82 of drum 12. In extreme pivoting position 58 centre line 56 of drum frame 16 has an angle α of 7 degrees relative to centre line 54 of undercarriage 14. Because cable 6 is wound up adjacently of the coils already present on drum 12, cable 6 pulls drum 12 such that drum frame 16 is rotated in direction C. Pivot arms 27 and 29 are rotated wholly toward direction D₁ around pivot shafts 26 and 28. In the shown embodiment D₁ is about 1 metre.

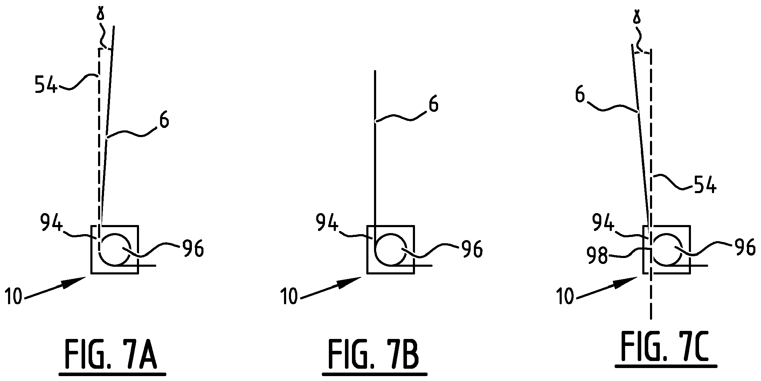

Once cable 6 (figure 6B) has been wound up to a point where cable 6 is located substantially in the centre of drum 12, i.e. between first side 82 and second side 84, centre line 54 of undercarriage 14 is in line with centre line 56 of drum frame 16. Pivot arms 27 and 29 are rotated in direction C around pivot shafts 26 and 28. View 99 is shown in figures 7A-C.

Guide devices 10 (figures 7A-C) comprise base 94 and guide disc 96. Cable 6 is guided through an angle by guide disc 96. In figure 7B the cable is guided through an angle of about 90 degrees. In figure 7A angle γ is provided between centre line 54 of undercarriage 14 and cable 6. In figure 7A cable 6 is therefore guided through an angle of 90 - γ. In figure 7C cable 6 is guided through an angle of 90 + γ. Centre line 54 of undercarriage 14 ends at edge 98 of guide disc 96. In the shown embodiment angle γ is about 8 degrees. It will be apparent to the skilled person that angle γ depends on distance D₁.

Following further winding of cable 6 (figure 6C) onto drum 12, cable 6 is carried to second side 82 in that it positions itself in each case adjacently of the coils already present on drum 12. Pulling device 18 is hereby rotated further in direction C. When cable 6 is on second side 82, pulling device 18 is in its extreme pivoting position 86. In extreme pivoting position 58 pulling device 18 has been rotated as far as possible in direction D, and in extreme pivoting position 86 pulling device 18 has been rotated as far as possible in direction C. Pivot arms 27 and 29 have been rotated wholly in direction C around pivot shafts 26 and 28.

When pulling device 18 is in extreme pivoting position 86 and winds up cable 6 further, pulling device 18 is rotated in direction D and finally ends up in extreme pivoting position 56. It is realized by rotation in direction C and D that cable 6 is not wound up over coils already present on drum 12, this resulting in displacement.

The present invention is by no means limited to the above described embodiments thereof. The rights sought are defined by the following claims, within the scope of which many modifications can be envisaged. Other than in the shown embodiments, the manure scraper system can thus also be embodied with one pulling device. It is also possible to position the pulling devices differently, instead of opposite each other as shown in the figures. It is thus also possible not to position the pulling devices on one plate.

## Claims

1. Manure scraper system, comprising:
- a manure scraper which is configured to be moved along a ground surface in an animal accommodation and to remove and/or carry along manure with; and
- a pulling device which is configured to move the manure scraper, comprising:
- a cable connected to the manure scraper;
- a drum frame provided with a drum connected to the cable;
wherein the drum is rotatable about a drum rotation axis, such that the cable is wound up by a rotation of the drum in a first rotation direction; and
- an undercarriage which is connected to the drum frame and which is configured to be arranged on the ground surface,
wherein the drum frame is rotatable relative to the undercarriage or is movable over a circular arc relative to the undercarriage about or by at least one first rotation axis.

2. Manure scraper system according to claim 1, wherein the drum frame is connected with the first rotation axis to the undercarriage.

3. Manure scraper system according to claim 2, wherein the drum frame is connected with a second rotation axis to the undercarriage.

4. Manure scraper system according to claim 3, further comprising two pivoting rods which are provided between the first and second rotation axis and the undercarriage, wherein a first end of each of the pivoting rods is connected to one of the respective rotation axes and a second end is connected rotatably to the undercarriage.

5. Manure scraper system according to any one of the foregoing claims, wherein a downward directed running surface is arranged on the drum frame, wherein the undercarriage comprises a support part which comprises at least one upward directed roller element, wherein the roller element is configured to run on the running surface of the drum frame.

6. Manure scraper system according to claim 5, wherein at least the first rotation axis is arranged on a first side of the drum frame and the support part is arranged on a second side of the drum frame lying opposite the first part.

7. Manure scraper system according to any one of the foregoing claims, further comprising a second pulling device, wherein the pulling device is configured to move the manure scraper in a first direction of movement and wherein the second pulling device is configured to move the manure scraper in a second direction of movement.

8. Manure scraper system according to any one of the foregoing claims, further comprising a guide element for guiding the cable through an angle.

9. Manure scraper system according to any one of the foregoing claims, wherein the frame is provided with a protective cover which is configured to enclose the drum.

10. Manure scraper system according to any one of the foregoing claims, wherein the pulling device further comprises a drive for rotating the drum about the drum rotation axis.

11. Manure scraper system according to claim 10, wherein the drive comprises a drive element and a chain connected thereto, wherein the chain is connected operatively to the drum for the purpose of rotating the drum, wherein the position of the drive element relative to the chain is adjustable.

12. Manure scraper system according to any one of the foregoing claims, further comprising an encoder for directly or indirectly determining the rotation of the drum.

13. Animal accommodation provided with a manure scraper according to any one of the foregoing claims.

14. Method for removing manure, comprising of:
- providing a manure scraper system according to any one of the claims 1-12;
- rotating the drum such that the cable is retracted; and
- moving the manure scraper over the ground surface by retracting the cable.

15. Method according to claim 14, further comprising of:
- pivoting the pulling device such that the cable is oriented substantially perpendicularly of the drum rotation axis of the drum;
